# EUROPEAN PATENT SPECIFICATION

(11) **EP 2 800 449 B1**
(45) Date of publication and mention of the grant of the patent: **28.11.2018**
(21) Application number: 13360006.4
(22) Date of filing: 02.05.2013
(51) Int. Cl.: H04W 36/00, H04W 36/04, H04W 84/04, H04W 92/20

(54) **A communication method, telecommunications system, source node and target node for establishing an X2 connection between the source node and the target node**
Kommunikationsverfahren, Telekommunikationssystem, Quellknoten und Zielknoten zur Herstellung einer Verbindung zwischen Quellknoten und Zielknoten
Procédé de communication, système de télécommunications, noeud source et noeud cible pour établir une connexion X2 entre le noeud source et le noeud cible

(43) Date of publication of application: 05.11.2014
(73) Proprietor: Alcatel Lucent, 91620 Nozay (FR)
(72) Inventor: Sapiano, Philip C., Swindon, Wiltshire SN5 7DJ (GB); Brend, Graham R., Swindon, Wiltshire SN5 7DJ (GB)
(74) Representative: Nokia EPO representatives

(56) References cited:
- US-A1- 2010 008 293
- US-A1- 2013 023 301
- "3rd Generation Partnership Project; Technical Specification Group Radio Access Network; Evolved Universal Terrestrial Radio Access Network (E-UTRAN); S1 Application Protocol (S1AP) (Release 11)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V11.3.0, 15 March 2013 (2013-03-15), pages 1-274, XP050692274, [retrieved on 2013-03-15]
- "3rd Generation Partnership Project; Technical Specification Group Services and System Aspects; General Packet Radio Service (GPRS) enhancements for Evolved Universal Terrestrial Radio Access Network (E-UTRAN) access (Release 12)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 5 March 2013 (2013-03-05), pages 1-290, XP050691826, [retrieved on 2013-03-05]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.5.0, 15 March 2013 (2013-03-15), pages 1-209, XP050692265, [retrieved on 2013-03-15]

## Description

### FIELD OF THE INVENTION

The present invention relates to a method of establishing a direct connection between a source node and a target node in a telecommunications network, a telecommunications system, a source node and a target node.

### BACKGROUND OF THE INVENTION

Small Cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, often referred to as Home eNode Bs (HeNBs), typically use the customer's broadband internet connection, for example DSL, cable or the like, as backhaul towards the macrocellular network.

Adoption of HeNBs by wireless operators is widespread and with the increasing rate of adoption, the ability to integrate deployed small cells into the existing macrocellular network as seamlessly as possible is becoming increasingly important.

One of the considerations when deploying HeNBs in a macrocellular network is whether a direct connection or interface is to be allowed between the existing macrocellular nodes (eNode B) and the HeNBs. Supporting a direct connection between such nodes is beneficial as it allows a number of features to be supported, such as handover from one node to the other, interference co-ordination, load information sharing and support of self optimisation, which may be important as small cells are often user deployed. 3GPP standards defined examples of such direct connections are lur connections in UMTS telecommunications networks and X2 connections in LTE telecommunication networks.

However, one issue with allowing direct connections between macro eNodeB's and HeNB nodes is scalability. For example, supporting many direct connections from a eNode B to what could be a large number of HeNBs within its coverage area, could exhaust the available resources on the eNode B, both in terms of the actual number of direct connections the macro cell node is configured to support, and the processing resource required to manage that many connections.

Known methods that utilise the latest approved version of the 3GPP defined Evolved Universal Terrestrial Radio Access Network (E-UTRAN) X2 application protocol (X2AP) specification, Release 11.5.0 (18 March 2013), allow for one node to use the X2AP protocol to prevent another node performing a handover to it. However this can only be performed after an X2 interface has been established between the nodes and information that the node uses to determine whether to prevent a handover from another node using the X2AP protocol is typically preconfigured and is not well adapted to the small cell environment, where HeNBs are often deployed by the end user, normally in a location that cannot be pre-determined and said HeNBs can additionally be switched off and on at random times.

It is therefore desirable to provide a mechanism that allows macro network nodes and small cells to exchange information about the setup of direct connections between themselves in a dynamic and self-organising fashion.

3GPP TS 36.413 V11.3.0 (2013-03) provides a technical specification for the E-UTRAN S1 Application Protocol (S1AP), in which handover signalling and various handover signalling messages are discussed.

3GPP TS 23.401 v12.0.0 (2013-03) provides a technical specification for GPRS enhancements for E-UTRAN access. It addresses Network management functions such as load balancing and Network elements such as a HeNB subsystem. Information flows are discussed, including Handover. With regard to the latter, a procedure for handover of a UE from a source eNodeB to a target eNodeB using the X2 reference point ("X2-based handover") is discussed. An S1-based handover is also mentioned, i.e. for when X2-based handover cannot be used.

US2010008293A1 discloses systems and methodologies for using an X2-AP interface for data exchange between an access terminal and a Home access terminal. Based upon a received request from a Home access terminal, the access terminal can activate an X2-AP interface connection on demand over Stream Control Transmission Protocol (SCTP) based upon a maximum number of connections not being met and/or a timer evaluation that indicates the request is within an allowed time period.

### SUMMARY OF THE INVENTION

The invention is defined in the independent claims 1 and 12 to 15. Embodiments of the invention are defined in the dependent claims. The embodiments and/or examples of the following description which are not covered by the appended claims are considered as not being part of the present invention.

According to a first aspect of the invention, there is provided a communication method for determining whether to establish a direct connection between a source node and a target node in a telecommunications network, the source node and the target node having no direct connection established between them, the source node comprising a small cell node or a macro cell node and the target node comprising the other of the small cell node or the macro cell node, the method comprising: transmitting a handover request message from the source node to the target node via a Mobility Management Entity, MME, the handover request message comprising direct connection status information of the source node; determining at the target node if a direct connection with the source node is permitted based on the provided direct connection status information and the current status of the target node; transmitting a handover response message including handover information and direct connection configuration information from the target node to the source node via the MME, if a direct connection between the source node and the target node is permitted; and determining by the source node whether it should establish a direct connection with the target node based on the presence of the direct connection configuration information in the received handover response message.

If it is determined that a direct connection with the source node is not permitted, the method may comprise transmitting a handover response message comprising handover information and no direct connection configuration information from the target node to the source node.

The method may further comprise establishing a direct connection with the target node based on the direct configuration information, if direct connection configuration information is determined to be present in the handover response message.

The target node may determine if a direct connection with the source node is permitted based on the load associated with direct connections it currently has established to other nodes and whether a new direct connection will exceed a threshold load. The load associated with the direct connections it currently has established may be the number of direct connections it currently has established. The threshold load may be a threshold number of direct connection slots.

The target node may determine if a direct connection with the source node is permitted based on the frequency of handover requests from the source node. The frequency of handover request may be the number of times the source node has previously requested handover with said target node. The target node may determine that a direct connection with the source node is permitted if the frequency handover request from the source node is greater than a threshold value.

The target node may determine that a direct connection with the source node is permitted based on the frequency of radio resource connection re-establishment requests by a user equipment prepared for handover from the source node.

The target node may determine that a direct connection with the source node is permitted if the frequency of radio resource connection re-establishment requests by a user equipment prepared for handover from the source node is greater than a threshold value.

The target node may determine that a direct connection with the source node is permitted by determining how many active users the source node is currently serving, and determines that a direct connection with the source node is permitted if the number of active users the source node is currently serving is greater than a threshold value.

An X2 connection may not only be used for handover between nodes, but can also be used to exchange information for interference coordination based upon time domain blanking of physical resource blocks. It may be therefore that the benefit of setting up an X2 connection with the eNode B is reduced if the HeNB does not have phase synchronisation. Therefore it may be beneficial to communicate this state to the peer eNB node.

The handover request message may comprise one or more of an identifier identifying the source node, an identifier indicating the type of node the source node is, information on whether the source node is available for direct connection establishment, information indicating whether the source node is configured to support phase synchronisation, information indicating which features of the direct connection the source node supports and information indicating how many active users the source node currently supports.

The direct connection configuration information transmitted from the target node to the source node may include transport level address information required to set up a direct connection.

The method may further comprise receiving measurement information from a user equipment indicting that a handover to the target node is required; and transmitting the handover request message to the target node in response to received measurement information.

The source node may transmit the handover request message to a mobile management entity (MME), and the mobile management entity transmits a mobile management entity handover request message to the target node, and the target node may transmit the handover response message to the mobile management entity, and the mobile management entity transmits a mobile management entity handover response message to the source node.

The telecommunications network may be an LTE network and the direct connection may be an X2 connection or the telecommunications network may be a UMTS network and the direct connection may be an lur connection.

According to a second aspect of the invention, there is provided a telecommunications system, comprising: a source node and a target node, the source node comprising a small cell node or a macro cell node and the target node comprising the other of the small cell node or the macro cell node, the source node and the target node having no direct connection established between them, wherein the source node is operable to transmit a handover request message to the target node via a Mobility Management Entity, MME, the handover request message comprising direct connection status information of the source node, the target node is operable to determine if a direct connection with the source node is permitted based on the provided direct connection status information and the current status of the target node, and the target node is operable to transmit a handover response message via the MME including handover information and direct connection configuration information from the target node to the source node, if a direct connection between the source node and the target node is permitted, whereby the source node is operable to determine whether it should establish a direct connection with the target node based on the presence of the direct connection configuration information in the received handover response message.

According to a third aspect of the invention, there is provided a source node of a telecommunications network, wherein the source node is operable to transmit a handover request message to a target node via a Mobility Management Entity, MME, while the source node and the target node have no direct connection established between them, the handover request message comprising direct connection status information of the source node, and receive a handover response message from the target node via the MME including handover information and direct connection configuration information from the target node, if a direct connection between the source node and the target node is permitted, whereby the source node is operable to determine whether it should establish a direct connection with the target node based on the presence of the direct connection configuration information in the received handover response message, and wherein the source node comprises a small cell node or a macro cell node and the target node comprises the other of the small cell node or the macro cell node.

According to a fourth aspect of the invention, there is provided a target node in a telecommunications network, wherein the target node is operable to receive a handover request message from a source node via a Mobility Management Entity, MME, while the source node and the target node have no direct connection established between them, the handover request message comprising direct connection status information of the source node, determine if a direct connection with the source node is permitted based on the provided direct connection status information and the current status of the target node, and transmit a handover response message including handover information and direct connection configuration information to the source node via the MME, if a direct connection between the source node and the target node is permitted, whereby the target node is operable to include direct connection configuration information in the handover response message for enabling the source node to determine whether said source node should establish a direct connection with the target node, and wherein the target node comprises a small cell node or a macro cell node and the source node comprises the other of the small cell node or the macro cell node.

According to a fifth aspect of the invention, there is provided a computer program product operable when executed on a computer to perform the above-described method.

Further particular and preferred aspects of the invention are set out in the accompanying independent and dependent claims.

### BRIEF DESCRIPTION OF THE DRAWINGS

Some embodiments of the apparatus and/or methods in accordance with embodiment of the present invention are now described, by way of example only, with reference to the accompanying drawings, in which:
Figure 1 shows an example of a telecommunications network comprising a small cell cluster and a macro cell;
Figure 2 shows an LTE macrocell architecture and an LTE small cell architecture;
Figure 3 shows a communication method of an embodiment; and
Figure 4 shows a flow chart of the logic of the target node according to an embodiment.

### DESCRIPTION OF EMBODIMENTS

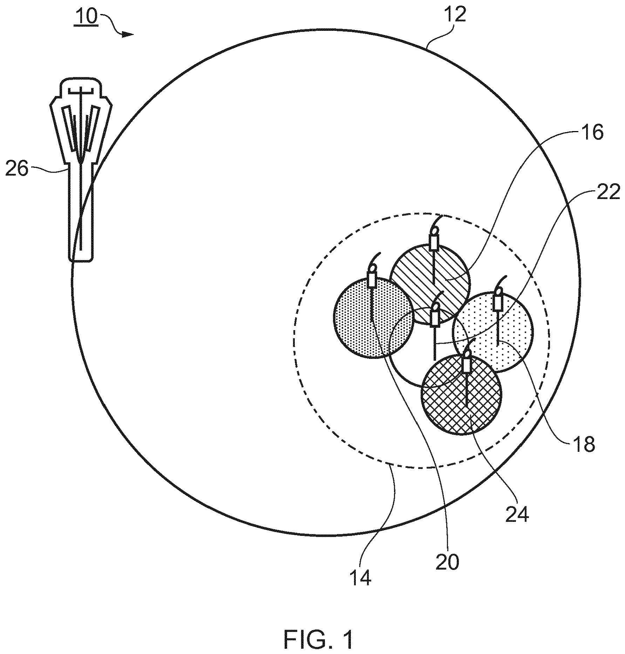

Figure 1 illustrates a heterogeneous telecommunications network 10 comprising a macro cell 12 and a cluster of small cells 14. The cluster of small cells 14 comprises a first small cell 16, a second small cell 18, a third small cell 20, a fourth small cell 22 and a fifth small cell 24. The small cells are distributed geographically to provide an area of coverage within the macro cell 12. User equipment (not shown) may roam through the network 10. When the user equipment is located within the macro cell 12, communications may be established between the user equipment and the macro cell base station 26 over an associated radio link. If the user equipment is located geographically within one of the small cells 16, 18, 20, 22 and 24, communications may be established between the user equipment and the base station of the associated small cell over an associated radio link. Of course, it will be appreciated that Figure 1 shows only an example heterogeneous network and that a plurality of macro cells may be provided, more or less than five small cells may be provided and a plurality of small cell clusters may be provided.

As described above, within the macro cell 12, there is provided a plurality of small cell base stations which provide a plurality of small cells 16, 18, 20, 22, and 24. The small cells provide local communications coverage for a user in their vicinity. As a user equipment comes within range of a small cell, such as the first small cell 16, a handover may occur between the base station 26 of the macro cell and the base station of the small cell, when the base station of the small cell detects that user equipment has come within range. Likewise, as a user equipment comes within range of a different small cell, a handover may occur between the base station of the current small cell and the base station of the new small cell, when the base station of the new small cell detects that user equipment has come within range.

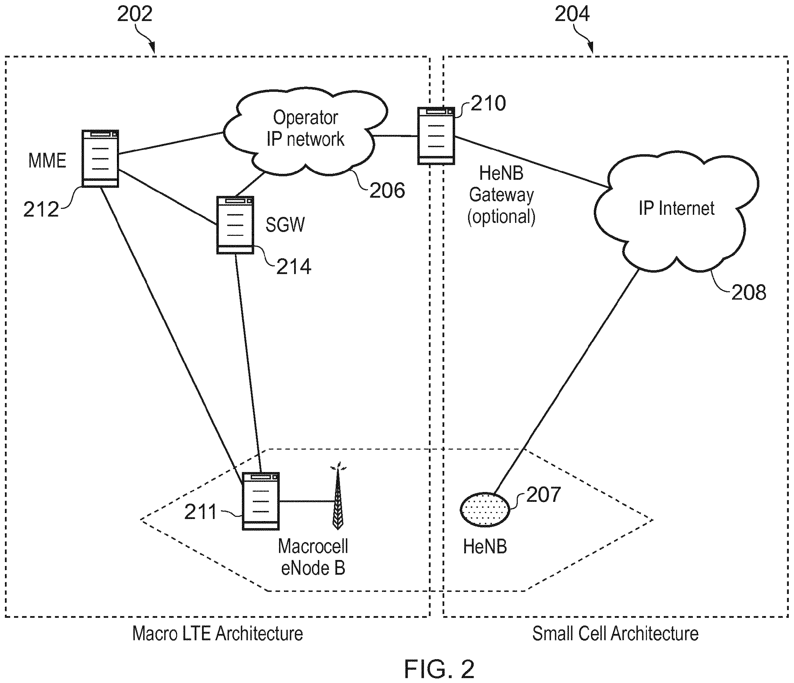

Figure 2 shows a LTE macro cell architecture 202 and a LTE small cell architecture 204 in communication through a core IP network. As can be seen, the HeNB 207 is connected to the core IP network 206 through IP internet 208 and an optional HeNB gateway 210. The eNodeB 211 is connected to the core network 206 via mobile management entity (MME) 212 and serving gateway (SGW) 214. The eNode B 211 communicates with the MME 212 and the SGW 214 using S1 communication protocols.

Although Figure 2 shows only a single eNode B 211, it should be appreciated that a plurality of eNode Bs may be provided. Likewise, a plurality of HeNBs may be provided.

Typically if a handover for a user equipment is required between the HeNB 207 and the eNode B 211, the handover procedures will be carried out via the core IP network using the S1AP communications protocols as defined in 3GPP 36.413, release 11.3.0 (18 March 2013).

In order to make handover more efficient between the HeNB 207 and the eNode B 211, it is desirable that a direct connection be established between the HeNB 207 and the eNode B 211. The X2AP protocol defined by 3GPP 36.423 release 11.4.0 (18 March 2013), provides for direct connections between two macro cell eNode Bs and between a macro cell eNode B and a HeNB, provided that the HeNB supports certain access modes.

One issue with allowing the establishment of X2 connections between macro cell eNode Bs and HeNBs is scalability. It is important to note that many HeNBs may be provided in a relatively small geographical area, and as many of the HeNBs are user deployed, the network operator will have little or no control over the X2 connection demand placed on the eNode Bs. It is therefore important that the eNode B 211 can manage its resources efficiently and can ensure that its available resources are not exhausted should many HeNBs want to create an X2 connection with said eNode B.

Another issue with allowing the establishment of X2 connections between eNode Bs and HeNBs is whether an X2 interface should be established between neighbouring nodes regardless of whether they will actually use such an interface, for example to handover a user equipment between themselves. Further, given the limited coverage area of a HeNB, there is the issue of whether it is beneficial to trigger the establishment of an X2 connection to a eNode B for the purposes of handing over a user equipment when the user equipment may quickly leave the coverage area of the HeNB. In other words, another issue is whether an X2 connection can be established quickly enough for it to be used for handing over the user equipment.

It is therefore desirable to allow a eNode B to quickly and efficiently determine whether it should, or should not, establish an X2 connection to an HeNB and vice versa.

Embodiments introduce a mechanism whereby two nodes that do not currently have an X2 connection established between themselves can exchange information as part of another procedure, that allows them to quickly determine whether an X2 connection should be established between themselves for subsequent communications, for example for supporting subsequent handovers of user equipments.

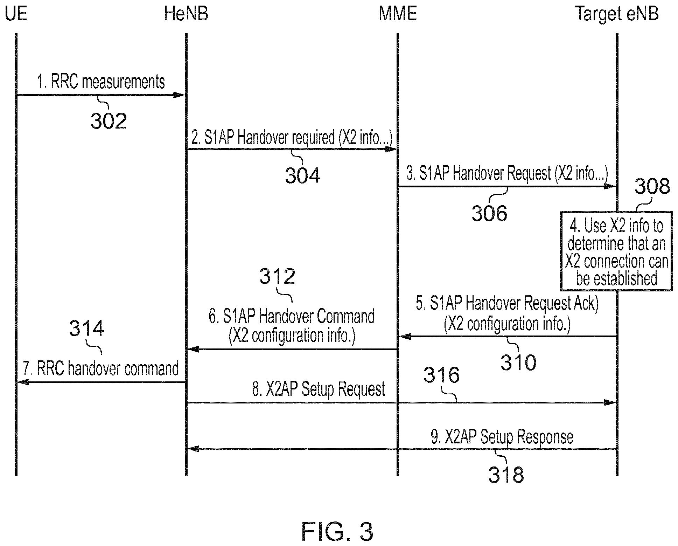

Figure 3 shows a communication method of a first embodiment in an LTE telecommunications network. In a first step 302, an HeNB (source node) receives radio resource control (RRC) measurements from a user equipment (UE) that triggers a handover to a neighbouring eNB (target node).

In a second step 304, the HeNB initiates a S1AP Handover preparation procedure by sending an S1AP Handover Required message to the MME which in turn triggers a S1AP Handover Request message to the target eNB. The HeNB provides additional information in the existing S1AP Handover Required/Request message that is related to its X2 connection status. The existing S1AP Handover Request and Required messages are as defined in 3GPP specification 36.413 release 11.3.0. (18 March 2013)

The additional X2 related information provided to the eNB by the HeNB includes one or more of information indicating whether the HeNB has resources available or capability for establishing an X2 connection, the type of node the source node is (in the example of Figure 3 a HeNB node), the source node Identifier, whether the source node is configured to support phase synchronization, which X2 features the source node supports and how many active users are currently supported by the source node.

In a third step 306, The MME sends a corresponding S1AP Handover Request message to the target eNB including the additional information related to the X2 connection status of the source HeNB.

In a fourth step 308, the target eNB determines from its own X2 connection status and the X2 information provided by the source HeNB whether or not it should allow the establishment of an X2 connection between the HeNB and the eNB. In the method of Figure 3, the additional information relating to the X2 connection status provided by the source node (HeNB) to the target node (eNB) when it performs an S1AP Handover Preparation procedure to the target node allows the target node (eNB) to determine whether it would be beneficial to have an X2 connection established to said source node (HeNB) and whether or not it should in turn reply to the source node (HeNB) during the handover preparation procedure with X2 configuration information indicating to the source node (HeNB) that it should then subsequently establish an X2 connection to the target node (eNB).

In order to determine whether the target eNB will support an X2 connection from the source HeNB, the target will take into account its own status information such as the number of X2 connections it already has established in order to determine if it is possible to support another X2 connection, whether the source HeNB has previously attempted a handover to that eNB in order to give priority for X2 connections from HeNBs that request handover to the target eNB often, whether the source HeNB is currently serving many or few active users in order to give priority for X2 connections with HeNBs serving many users that are likely to require more handovers, and the frequency of radio resource connection re-establishment requests for prepared handovers by user equipments in order to give priority for X2 connections with HeNBs having user equipment that have attempted radio resource connection re-establishment often.

A number of thresholds can be implemented on the target eNB, against which the status information is checked. Such thresholds can either be managed dynamically and hence vary according to the current status of the eNB, or the thresholds can be predetermined/statically pre-provisioned.

If the target eNB determines that it would be beneficial to establish an X2 connection between itself and the source HeNB it includes X2 configuration information, such as its IP Address, port number and the like, in the handover response.

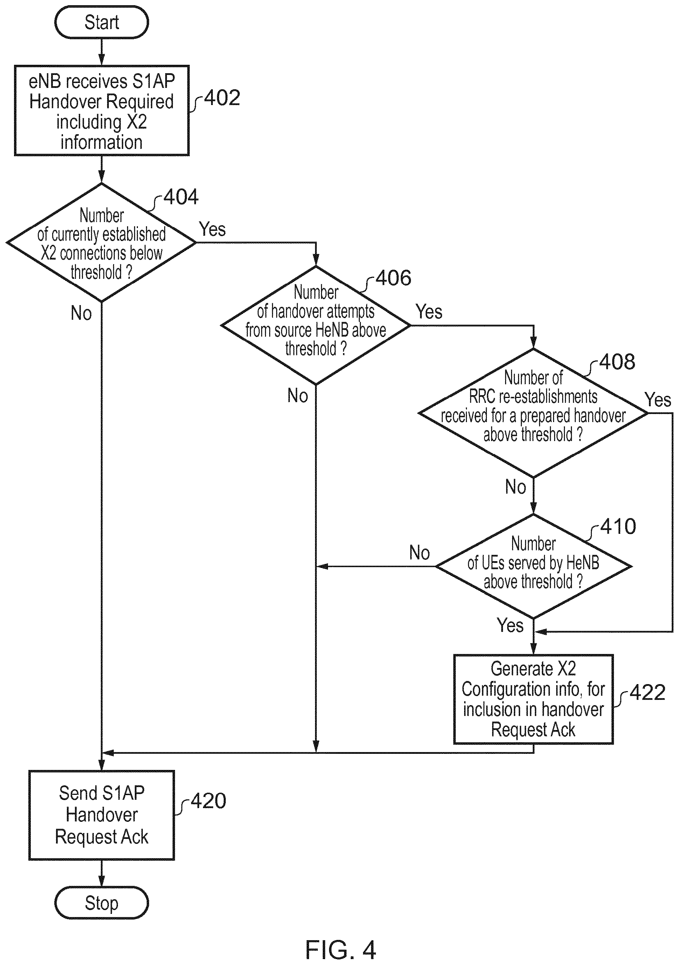

In the example shown in Figure 4, the macro cell eNB determines that an X2 connection should be established.

In a fifth step 310, the target eNB responds to the MME with an S1AP Handover Request Acknowledge message and includes its X2 configuration information. The X2 configuration information is provided as additional information to the existing S1AP Handover Request Acknowledge message, this existing message is as defined in 3GPP specification 36.413 release 11.3.0. (18 March 2013).

In a sixth step 312, the MME sends a corresponding S1AP Handover Command message including the additional X2 configuration information from the target eNB to the source HeNB. The existing S1AP Handover Command message is as defined in 3GPP specification 36.413 release 11.3.0. (18 March 2013).

In a seventh step 314, the source HeNB triggers the UE to handover to the target eNB. Hence when the source HeNB receives the response from the target eNB, it can determine from the presence (or absence) of X2 configuration information whether it should then trigger the establishment of an X2 connection to the target eNB or not.

In an eighth step 316, the HeNB then triggers the establishment of an X2 connection to the target eNB by sensing an X2AP setup request to the target eNB using the configuration information sent from that eNB. The X2AP Setup Request message is as defined in 3GPP specification 36.423 release 11.4.0 (18 March 2013).

In a ninth step 318, the eNB responds to the HeNB with an X2AP setup response message, as defined in 3GPP specification 36.423 release 11.4.0 (18 March 2013), thereby establishing the X2 connection between the HeNB and the eNB. On establishment of the X2 connection between the HeNB and the eNB, the X2 connection can be used for subsequent handover procedures.

The embodiments described in relation to Figure 3 ensure that the source node (HeNB) can establish an X2 connection to the target node (eNB) when there is an expectation that the X2 connection will be subsequently used, such as for a handover when a user equipment moves between these nodes.

Having the ability to dynamically decide whether to trigger the establishment of an X2 connection to another node, is beneficial when the source node is a small cell (e.g. HeNB), since it will typically have a small coverage area and hence any user equipments that are mobile within that coverage area may need to be quickly handed over to another node before they leave "control" of the source small cell. Therefore the method of Figure 3 provides the ability to trigger a procedure, e.g. the S1AP Handover preparation and use it to handover the user equipment to another node, whilst also at the same time determining whether an X2 connection should then be established between the nodes. In other words, the method of Figure 3 provides a mechanism that a node can use to dynamically manage X2 connections to it.

Figure 4 shows an overview of the logic implemented on the target node to determine whether to allow an X2 connection or not. In Figure 4, the target node is the eNB, as also shown in Figure 3.

In a first step 402, the eNB receives the S1AP Handover request from the source node (HeNB) including additional X2 connection information. This step is equivalent to steps 304 and 306 of Figure 3.

In a second step 404, the eNB determines if the number of currently established X2 connection is below a threshold or not. If the answer is 'no', it is determined that it is not beneficial/desirable to allow the establishment of an X2 connection to the target eNB and the process proceeds directly to step 420, at which point the eNB transmits a S1AP Handover Request Acknowledge, and handover proceeds using the standard S1AP communications protocols. If the answer is 'yes', it is determined that it may be beneficial/possible to establish an X2 connection and the process proceeds to a third step 406.

In the third step 406, the eNB determines whether the number of handover attempts from the source HeNB is greater than a threshold or not. If the answer is 'no', it is determined that it is not beneficial/desirable to allow the establishment of an X2 connection to the target eNB and the process proceeds directly to step 420, at which point the eNB transmits a S1AP Handover Request Acknowledge, and handover proceeds using the standard S1AP communications protocols. If the answer is 'yes', it is determined that it may be beneficial/possible to establish an X2 connection and the process proceeds to a fourth step 408.

In the fourth step 408, the eNB determines whether the number of RRC re-establishments received for a prepared handover is greater than a threshold or not. If the answer is 'yes', the process proceeds to step 412, where X2 configuration information is generated for inclusion into the S1AP Handover Request Acknowledge message and then to step 420 in which the eNB transmits a S1AP Handover Request Acknowledge message including the X2 configuration information. The source node HeNB can then set up an X2 connection with the target node eNB for use for subsequent X2AP procedures. If the answer is 'no', the process proceeds to a fifth step 410.

In the fifth step 410, is the eNB determines whether the number of user equipment served by the source HeNB is greater than a threshold. If the answer is 'no' it is determined that it is not beneficial/desirable to allow the establishment of an X2 connection to the target eNB and the process proceeds directly to step 420, at which point the eNB transmits a S1AP Handover Request Acknowledge message, and handover proceeds using the standard S1AP communications protocols. If the answer is 'yes', the process proceeds to step 412, where X2 configuration information is generated for inclusion into the S1AP Handover Request Acknowledge message and then to step 420 in which the eNB transmits a S1AP Handover Request Acknowledge message including the X2 configuration information. The source HeNB can then set up an X2 connection with the target node eNB for use for subsequent X2AP procedures.

The process described in relation to Figure 4 ensures that an X2 connection is only established between a target node (eNB) and a source node (HeNB) when one is available and there is a likelihood that such a connection would be used if one was established.

The above-described thresholds in relation to Figure 4 may either be managed dynamically and hence vary according to the current status of the target eNB, or the thresholds can be predetermined/statically pre-provisioned.

Although the embodiments of Figures 3 and 4 describe an HeNB as a source node that requests an X2 connection with an eNB as a target node, it should be appreciated that in some embodiments, the eNB may be the source node requesting an X2 connection with an HeNB as the target node, and it is the HeNB in these embodiments that will determine if establishment of an X2 connection is possible.

Further, although Figures 2, 3 and 4 describe embodiments in an LTE telecommunications network and the establishment of X2 connections between HeNBs and eNBs, it should be apparent that the embodiments could equally be applied to the establishment of lur connections between HNBs and RNCs in a UMTS telecommunications network.

The present inventions may be embodied in other specific apparatus and/or methods. The described embodiments are to be considered in all respects as only illustrative and not restrictive. In particular, the scope of the invention is indicated by the appended claims rather than by the description and figures herein.

## Claims

1. A communication method for determining whether to establish a direct connection between a source node (207) and a target node (211) in a telecommunications network (10), the source node (207) and the target node (211) having no direct connection established between them, the source node (207) comprising a small cell node (16-24) or a macro cell node (26) and the target node (211) comprising the other of the small cell node (16-24) or the macro cell node (26), the method comprising:
transmitting (304) a handover request message (2) from the source node (207) to the target node (211) via a Mobility Management Entity, MME (212), the handover request message (2) comprising direct connection status information of the source node (207);
determining (308) at the target node (211) if a direct connection with the source node (207) is permitted based on the provided direct connection status information and the current status of the target node (211);
transmitting (310) a handover response message (5) including handover information and direct connection configuration information from the target node (211) to the source node (207) via the MME (212), if a direct connection between the source node (207) and the target node (211) is permitted; and
determining by the source node (207) whether it should establish a direct connection with the target node (211) based on the presence of the direct connection configuration information in the received handover response message (5).

2. A method according to claim 1, wherein if it is determined that a direct connection with the source node (207) is not permitted, the method comprises transmitting a handover response message (5) comprising handover information and no direct connection configuration information from the target node (211) to the source node (207).

3. A method according to claim 1 or 2, further comprising:
establishing a direct connection with the target node (211) based on the direct configuration information, if direct connection configuration information is determined to be present in the handover response message (5).

4. A method according to any preceding claim, wherein the target node (211) determines (404) if a direct connection with the source node (207) is permitted based on the load associated with the direct connections it currently has established and whether a new direct connection will exceed a threshold load.

5. A method according to any preceding claim, wherein the target node (211) determines (406) if a direct connection with the source node (207) is permitted based on the frequency of handover request from the source node.

6. A method according to claim 5, wherein the target node (211) determines (406) that a direct connection with the source node (207) is permitted if the frequency of handover request from the source node (207) is greater than a threshold value.

7. A method according to claim 6, wherein the target node (211) determines (408) if a direct connection with the source node (207) is permitted based on the frequency of re-establishment requests by a user equipment prepared for handover from the source node (207).

8. A method according to claim 7, wherein the target node (211) determines that a direct connection with the source node (408) is permitted if the frequency of re-establishment requests by a user equipment prepared for handover from the source node (207) is greater than a threshold value.

9. A method according to any preceding claim, wherein the target node (211) determines if a direct connection with the source node (207) is permitted by determining (410) how many active users the source node is currently serving, and determines that a direct connection with the source node is permitted if the number of active users the source node is currently serving is greater than a threshold value.

10. A method according to any preceding claim, wherein the handover request message (304) comprises one or more of an identifier identifying the source node (207), an identifier indicating the type of node the source node (207) is, information on whether the source node (207) is available for direct connection establishment, information indicating whether the source node (207) is configured to support phase synchronisation, information indicating which features of the direct connection the source node (207) supports and information indicating how many active users the source node (207) currently supports.

11. A method according to any preceding claim, wherein the telecommunications network (10) is an LTE network and the direct connection is an X2 connection or the telecommunications network is a UMTS network and the direct connection is an lur connection.

12. A telecommunications system, comprising:
a source node (207) and a target node (211), the source node (207) comprising a small cell node (16-24) or a macro cell node (26) and the target node (211) comprising the other of the small cell (16-24) node or the macro cell node (26), the source node (207) and the target node (211) having no direct connection established between them, wherein
the source node (207) is operable to transmit (304) a handover request message (2) to the target node (211) via a Mobility Management Entity, MME (212), the handover request message (2) comprising direct connection status information of the source node (207),
the target node (211) is operable to determine (308) if a direct connection with the source node (207) is permitted based on the provided direct connection status information and the current status of the target node (211), and
the target node (211) is operable to transmit (310) a handover response message (5) via the MME (212) including handover information and direct connection configuration information from the target node (211) to the source node (207), if a direct connection between the source node (207) and the target node (211) is permitted, whereby the source node (207) is operable to determine whether it should establish a direct connection with the target node (211) based on the presence of the direct connection configuration information in the received handover response message (5).

13. A source node (207) of a telecommunications network (10), wherein the source node (207) is operable to
transmit (304) a handover request message (2) to a target node (211) via a Mobility Management Entity, MME (212), while the source node (207) and the target node (211) have no direct connection established between them, the handover request message (2) comprising direct connection status information of the source node (207), and
receive a handover response message (5) from the target node (211) via the MME (212) including handover information and direct connection configuration information from the target node (211), if a direct connection between the source node (207) and the target node (211) is permitted, whereby the source node (207) is operable to determine whether it should establish a direct connection with the target node (211) based on the presence of the direct connection configuration information in the received handover response message (5), and wherein
the source node (207) comprises a small cell node (16-24) or a macro cell node (26) and the target node (211) comprises the other of the small cell node (16-24) or the macro cell node (26).

14. A target node (211) in a telecommunications network (10), wherein the target node (211) is operable to
receive a handover request message (2) from a source node (207) via a Mobility Management Entity, MME (212), the handover request message (2) comprising direct connection status information of the source node (207), while the source node (207) and the target node (211) have no direct connection established between them,
determine (308) if a direct connection with the source node (207) is permitted based on the provided direct connection status information and the current status of the target node (211), and
transmit (310) a handover response message (5) including handover information and direct connection configuration information to the source node (207) via the MME (212), if a direct connection between the source node (207) and the target node (211) is permitted, whereby the target node (211) is operable to include direct connection configuration information in the handover response message (5) for enabling the source node (207) to determine whether said source node (207) should establish a direct connection with the target node (211), and wherein
the target node (211) comprises a small cell node (16-24) or a macro cell node (26) and the source node (207) comprises the other of the small cell node (16-24) or the macro cell node (26).

15. A computer program product operable when executed on a computer to perform the method of any of claims 1 to 11.

## Patentansprüche

1. Kommunikationsverfahren zum Bestimmen, ob eine direkte Verbindung zwischen einem Quellknoten (207) und einem Zielknoten (211) in einem Telekommunikationsnetzwerk (10) aufgebaut werden soll, wobei der Quellknoten (207) und der Zielknoten (211) zwischen sich keine direkte Verbindung aufgebaut haben, wobei der Quellknoten (207) umfasst einen kleinen Zellknoten (16-24) oder einen Makrozellknoten (26) und wobei der Zielknoten (211) den anderen aus kleinem Zellknoten (16-24) bzw. Makrozellknoten (26) umfasst, wobei das Verfahren umfasst:
Übertragen (304) einer Handover-Anforderungsnachricht (2) von dem Quellknoten (207) auf den Zielknoten (211) über eine MME (Mobility Management Entity) (212), wobei die Handover-Anforderungsnachricht (2) umfasst direkte Verbindungsstatusinformation des Quellknotens (207);
Bestimmen (308) an dem Zielknoten (211), ob eine direkte Verbindung mit dem Quellknoten (207) gestattet ist auf Grundlage der bereitgestellten direkten Verbindungsstatusinformation und des momentanen Status des Zielknotens (211);
Übertragen (310) einer Handover-Antwortnachricht (5), einschließlich Handover-Information und direkter Verbindungskonfigurationsinformation von dem Zielknoten (211) auf den Quellknoten (207) über die MME (212), wenn eine direkte Verbindung zwischen dem Quellknoten (207) und dem Zielknoten (211) erlaubt ist; und
Bestimmen durch den Quellknoten (207), ob er eine direkte Verbindung mit dem Zielknoten (211) aufbauen sollte auf Grundlage des Vorhandenseins von direkter Verbindungskonfigurationsinformation in der empfangenen Handover-Antwortnachricht (5).

2. Verfahren nach Anspruch 1, wobei, wenn bestimmt wird, dass eine direkte Verbindung mit dem Quellknoten (207) nicht erlaubt ist, das Verfahren umfasst das Übertragen einer Handover-Antwortnachricht (5), umfassend Handover-Information und keine direkte Verbindungskonfigurationsinformation, von dem Zielknoten (211) auf den Quellknoten (207).

3. Verfahren nach Anspruch 1 oder 2, weiterhin umfassend:
Aufbau einer direkten Verbindung mit dem Zielknoten (211) auf Grundlage der direkten Konfigurationsinformation, wenn direkte Verbindungskonfigurationsinformation bestimmt wird als vorhanden in der Handover-Antwortnachricht (5).

4. Verfahren nach einem beliebigen der vorhergehenden Ansprüche, wobei der Zielknoten (211) bestimmt (404), ob eine direkte Verbindung mit dem Quellknoten (207) erlaubt ist auf Grundlage der Last, die verbunden ist mit den direkten Verbindungen, die er momentan aufgebaut hat, und ob eine neue direkte Verbindung eine Schwellenwertlast überschreiten wird.

5. Verfahren nach einem beliebigen der vorhergehenden Ansprüche, wobei der Zielknoten (211) bestimmt (406), ob eine direkte Verbindung mit dem Quellknoten (207) erlaubt ist auf Grundlage der Häufigkeit der Handover-Anforderung von dem Quellknoten.

6. Verfahren nach Anspruch 5, wobei der Zielknoten (211) bestimmt (406), dass eine direkte Verbindung mit dem Quellknoten (207) erlaubt ist, wenn die Häufigkeit der Handover-Anforderung von dem Quellknoten (207) größer ist als ein Schwellenwert.

7. Verfahren nach Anspruch 6, wobei der Zielknoten (211) bestimmt (408), ob eine direkte Verbindung mit dem Quellknoten (207) erlaubt ist auf Grundlage der Häufigkeit von Neuaufbau-Anforderung durch ein Teilnehmergerät, das vorbereitet ist für ein Handover von dem Quellknoten (207).

8. Verfahren nach Anspruch 7, wobei der Zielknoten (211) bestimmt, dass eine direkte Verbindung mit dem Quellknoten (408) erlaubt ist, wenn die Häufigkeit von Neuaufbau-Anforderungen durch ein Teilnehmergerät, das vorbereitet ist für ein Handover von dem Quellknoten (207), größer ist als ein Schwellenwert.

9. Verfahren nach einem beliebigen der vorhergehenden Ansprüche, wobei der Zielknoten (211) bestimmt, ob eine direkte Verbindung mit dem Quellknoten (207) erlaubt ist, durch Bestimmen (410), wie viele aktive Benutzer der Quellknoten momentan bedient, und Bestimmen, dass eine direkte Verbindung mit dem Quellknoten erlaubt ist, wenn die Anzahl aktiver Benutzer, die der Quellknoten momentan bedient, größer ist als ein Schwellenwert.

10. Verfahren nach einem beliebigen der vorhergehenden Ansprüche, wobei die Handover-Anforderungsnachricht (304) umfasst eine oder mehrere aus einer Kennung, die den Quellknoten (207) identifiziert, einer Kennung, welche den Typ von Knoten des Quellknotens (207) anzeigt, Information, ob der Quellknoten (207) verfügbar ist für den Aufbau einer direkten Verbindung, Information, die anzeigt, ob der Quellknoten (207) konfiguriert ist zum Unterstützen einer Phasensynchronisation, Information, die anzeigt, welche Funktionen der direkten Verbindung der Quellknoten (207) unterstützt, und Information, die anzeigt, wie viele aktive Benutzer der Quellknoten (207) momentan unterstützt.

11. Verfahren nach einem beliebigen der vorhergehenden Ansprüche, wobei das Telekommunikationsnetzwerk (10) ein LTE-Netzwerk ist und die direkte Verbindung eine X2-Verbindung ist oder das Telekommunikationsnetzwerk ein UMTS-Netzwerk ist und die direkte Verbindung eine Lur-Verbindung ist.

12. Telekommunikationssystem, umfassend:
einen Quellknoten (207) und einen Zielknoten (211), wobei der Quellknoten (207) einen kleinen Zellknoten (16-24) oder einen Makrozellknoten (26) umfasst und der Zielknoten (211) den anderen aus dem kleinen Zellknoten (16-24) bzw. dem Makrozellknoten (26) umfasst, wobei der Quellknoten (207) und der Zielknoten (211) zwischen sich keine direkte Verbindung aufgebaut haben,
wobei der Quellknoten (207) betreibbar ist zum Übertragen (304) einer Handover-Anforderungsnachricht (2) auf den Zielknoten (211) über eine MME (Mobility Management Entity) (212), wobei die Handover-Anforderungsnachricht (2) direkte Verbindungsstatusinformation des Quellknotens (207) umfasst,
wobei der Zielknoten (211) betreibbar ist zum Bestimmen (308), ob eine direkte Verbindung mit dem Quellknoten (207) gestattet ist auf Grundlage der bereitgestellten direkten Verbindungsstatusinformation und des momentanen Status des Zielknotens (211), und
wobei der Zielknoten (211) betreibbar ist zum Übertragen (310) einer Handover-Antwortnachricht (5) über die MME (212), einschließend Handover-Information und direkte Verbindungskonfigurationsinformation von dem Zielknoten (211) auf den Quellknoten (207), wenn eine direkte Verbindung zwischen dem Quellknoten (207) und dem Zielknoten (211) erlaubt ist, wobei der Quellknoten (207) betreibbar ist zum Bestimmen, ob er eine direkte Verbindung mit dem Zielknoten (211) aufbauen sollte auf Grundlage des Vorhandenseins von direkter Verbindungskonfigurationsinformation in der empfangenen Handover-Antwortnachricht (5).

13. Quellknoten (207) eines Telekommunikationsnetzwerks (10), wobei der Quellknoten (207) betreibbar ist zum
Übertragen (304) einer Handover-Anforderungsnachricht (2) auf einen Zielknoten (211) über eine MME, Mobility Management Entity, (212), während der Quellknoten (207) und der Zielknoten (211) keine direkte Verbindung zwischen sich aufgebaut haben, wobei die Handover-Anforderungsnachricht (2) umfasst direkte Verbindungsstatusinformation des Quellknotens (207), und
Empfangen einer Handover-Antwortnachricht (5) von dem Zielknoten (211) über die MME (212), einschließend Handover-Information und direkte Verbindungskonfigurationsinformation von dem Zielknoten (211), wenn eine direkte Verbindung zwischen dem Quellknoten (207) und dem Zielknoten (211) erlaubt ist, wobei der Quellknoten (207) betreibbar ist zum
Bestimmen, ob er eine direkte Verbindung mit dem Zielknoten (211) aufbauen sollte auf Grundlage des Vorhandenseins der direkten Verbindungskonfigurationsinformation in der empfangenen Handover-Antwortnachricht (5) und wobei
Der Quellknoten (207) umfasst einen kleinen Zellknoten (16-24) oder einen Makrozellknoten (26) und wobei der Zielknoten (211) umfasst den anderen von kleinem Zellknoten (16-24) bzw. Makrozellknoten (26).

14. Zielknoten (211) in einem Telekommunikationsnetzwerk (10), wobei der Zielknoten (211) betreibbar ist zum
Empfangen einer Handover-Anforderungsnachricht (2) von einem Quellknoten (207) über eine MME, Mobility Management Entity, (212), wobei die Handover-Anforderungsnachricht (2) direkte Verbindungsstatusinformation des Quellknotens (207) umfasst, während der Quellknoten (207) und der Zielknoten (211) zwischen sich keine direkte Verbindung aufgebaut haben,
Bestimmen (308), ob eine direkte Verbindung mit dem Quellknoten (207) erlaubt ist auf Grundlage der bereitgestellten direkten Verbindungsstatusinformation und des momentanen Status des Zielknotens (211), und
Übertragen (310) einer Handover-Antwortnachricht (5), einschließend Handover-Information und direkte Verbindungskonfigurationsinformation, auf den Quellknoten (207) über die MME (212), wenn eine direkte Verbindung zwischen dem Quellknoten (207) und dem Zielknoten (211) erlaubt ist, wobei der Zielknoten (211) betreibbar ist zum Einschließen direkter Verbindungskonfigurationsinformation in der Handover-Antwortnachricht (5), um dem Quellknoten (207) zu ermöglichen, zu bestimmen, ob besagter Quellknoten (207) eine direkte Verbindung mit dem Zielknoten (211) aufbauen sollte, und wobei
der Zielknoten (211) umfasst einen kleinen Zellknoten (16-24) oder einen Makrozellknoten (26) und wobei der Quellknoten (207) den anderen aus kleinem Zellknoten (16-24) bzw. Makrozellknoten (26) umfasst.

15. Computerprogramm-Produkt, betreibbar für das Durchführen des Verfahrens eines beliebigen der Ansprüche 1 bis 11, wenn es auf einem Computer ausgeführt wird.

## Revendications

1. Procédé de communication pour déterminer s'il faut établir ou non une connexion directe entre un noeud source (207) et un noeud cible (211) dans un réseau de télécommunication (10), le noeud source (207) et le noeud cible (211) n'ayant aucune connexion directe établie entre eux, le noeud source (207) comprenant un noeud de petites cellules (16 à 24) ou un noeud de macrocellules (26) et le noeud cible (211) comprenant l'autre noeud parmi le noeud de petites cellules (16-24) et le noeud de macrocellules (26), le procédé comprenant les étapes suivantes :
transmettre (304) un message de demande de transfert (2) à partir du noeud source (207) vers le noeud cible (211) par l'intermédiaire d'une entité de gestion de mobilité, MME (212), le message de demande de transfert (2) comprenant des informations d'état de connexion directe du noeud source (207) ;
déterminer (308) au niveau du noeud cible (211) si une connexion directe avec le noeud source (207) est autorisée en fonction des informations d'état de connexion directe fournies et de l'état actuel du noeud cible (211) ;
transmettre (310) un message de réponse de transfert (5) comprenant des informations de transfert et des informations de configuration de connexion directe à partir du noeud cible (211) vers le noeud source (207) par l'intermédiaire de la MME (212), si une connexion directe entre le noeud source (207) et le noeud cible (211) est autorisée ; et
déterminer au moyen du noeud source (207) s'il doit établir ou non une connexion directe avec le noeud cible (211) en fonction de la présence des informations de configuration de connexion directe dans le message de réponse de transfert (5) reçu.

2. Procédé selon la revendication 1, dans lequel s'il est déterminé qu'une connexion directe avec le noeud source (207) n'est pas autorisée, le procédé comprend la transmission d'un message de réponse de transfert (5) comprenant des informations de transfert et aucune information de configuration de connexion directe à partir du noeud cible (211) vers le noeud source (207).

3. Procédé selon la revendication 1 ou 2, comprenant en outre l'étape suivante :
établir une connexion directe avec le noeud cible (211) en fonction des informations de configuration directe, si des informations de configuration de connexion directe sont déterminées comme étant présentes dans le message de réponse de transfert (5).

4. Procédé selon l'une quelconque des revendications précédentes, dans lequel le noeud cible (211) détermine (404) si une connexion directe avec le noeud source (207) est autorisée en fonction de la charge associée aux connexions directes qu'il a actuellement établie et si une nouvelle connexion directe dépassera ou non une charge seuil.

5. Procédé selon l'une quelconque des revendications précédentes, dans lequel le noeud cible (211) détermine (406) si une connexion directe avec le noeud source (207) est autorisée en fonction de la fréquence de demande de transfert à partir du noeud source.

6. Procédé selon la revendication 5, dans lequel le noeud cible (211) détermine (406) qu'une connexion directe avec le noeud source (207) est autorisée si la fréquence de demande de transfert à partir du noeud source (207) est supérieure à une valeur de seuil.

7. Procédé selon la revendication 6, dans lequel le noeud cible (211) détermine (408) si une connexion directe avec le noeud source (207) est autorisée en fonction de la fréquence de demandes de rétablissement par un équipement utilisateur préparé pour le transfert à partir du noeud source (207).

8. Procédé selon la revendication 7, dans lequel le noeud cible (211) détermine qu'une connexion directe avec le noeud source (408) est autorisée si la fréquence de demandes de rétablissement par un équipement utilisateur préparé pour le transfert à partir du noeud source (207) est supérieure à une valeur de seuil.

9. Procédé selon l'une quelconque des revendications précédentes, dans lequel le noeud cible (211) détermine si une connexion directe avec le noeud source (207) est autorisée en déterminant (410) combien d'utilisateurs actifs le noeud source dessert actuellement, et détermine qu'une connexion directe avec le noeud source est autorisée si le nombre d'utilisateurs actifs que le noeud source dessert actuellement est supérieur à une valeur de seuil.

10. Procédé selon l'une quelconque des revendications précédentes, dans lequel le message de demande de transfert (304) comprend un ou plusieurs éléments parmi un identifiant qui identifie le noeud source (207), un identifiant indiquant le type de noeud qu'est le noeud source (207), des informations sur la disponibilité ou non du noeud source (207) pour un établissement de connexion directe, des informations indiquant si le noeud source (207) est configuré ou non pour prendre en charge une synchronisation de phases, des informations indiquant quelles caractéristiques de la connexion directe le noeud source (207) prend en charge et des informations indiquant combien d'utilisateurs actifs le noeud source (207) prend en charge actuellement.

11. Procédé selon l'une quelconque des revendications précédentes, dans lequel le réseau de télécommunication (10) est un réseau LTE et la connexion directe est une connexion X2 ou le réseau de télécommunication est un réseau UMTS et la connexion directe est une connexion lur.

12. Système de télécommunication, comprenant :
un noeud source (207) et un noeud cible (211), le noeud source (207) comprenant un noeud de petites cellules (16 à 24) ou un noeud de macrocellules (26) et le noeud cible (211) comprenant l'autre noeud parmi le noeud de petites cellules (16 à 24) et le noeud de macrocellules (26), le noeud source (207) et le noeud cible (211) n'ayant aucune connexion directe établie entre eux, dans lequel
le noeud source (207) permet de transmettre (304) un message de demande de transfert (2) au noeud cible (211) par l'intermédiaire d'une entité de gestion de mobilité, MME (212), le message de demande de transfert (2) comprenant des informations d'état de connexion directe du noeud source (207),
le noeud cible (211) permet de déterminer (308) si une connexion directe avec le noeud source (207) est autorisée en fonction des informations d'état de connexion directe fournies et de l'état actuel du noeud cible (211), et
le noeud cible (211) permet de transmettre (310) un message de réponse de transfert (5) par l'intermédiaire de la MME (212) comprenant des informations de transfert et des informations de configuration de connexion directe à partir du noeud cible (211) vers le noeud source (207), si une connexion directe entre le noeud source (207) et le noeud cible (211) est autorisée, le noeud source (207) permettant ainsi de déterminer s'il doit établir ou non une connexion directe avec le noeud cible (211) en fonction de la présence des informations de configuration de connexion directe dans le message de réponse de transfert (5) reçu.

13. Noeud source (207) d'un réseau de télécommunication (10), le noeud source (207) permettant
de transmettre (304) un message de demande de transfert (2) à un noeud cible (211) par l'intermédiaire d'une entité de gestion de mobilité, MME (212), alors que le noeud source (207) et le noeud cible (211) n'ont aucune connexion directe établie entre eux, le message de demande de transfert (2) comprenant des informations d'état de connexion directe du noeud source (207), et
de recevoir un message de réponse de transfert (5) à partir du noeud cible (211) par l'intermédiaire de la MME (212) comprenant des informations de transfert et des informations de configuration de connexion directe à partir du noeud cible (211), si une connexion directe entre le noeud source (207) et le noeud cible (211) est autorisée, le noeud source (207) permettant ainsi de déterminer s'il doit établir ou non une connexion directe avec le noeud cible (211) en fonction de la présence des informations de configuration de connexion directe dans le message de réponse de transfert (5) reçu, et dans lequel
le noeud source (207) comprend un noeud de petites cellules (16 à 24) ou un noeud de macrocellules (26) et le noeud cible (211) comprend l'autre noeud parmi le noeud de petites cellules (16 à 24) et le noeud de macrocellules (26).

14. Noeud cible (211) dans un réseau de télécommunication (10), le noeud cible (211) permettant
de recevoir un message de demande de transfert (2) à partir d'un noeud source (207) par l'intermédiaire d'une entité de gestion de mobilité, MME (212), le message de demande de transfert (2) comprenant des informations d'état de connexion directe du noeud source (207), alors que le noeud source (207) et le noeud cible (211) n'ont aucune connexion directe établie entre eux,
de déterminer (308) si une connexion directe avec le noeud source (207) est autorisée en fonction des informations d'état de connexion directe fournies et de l'état actuel du noeud cible (211), et
de transmettre (310) un message de réponse de transfert (5) comprenant des informations de transfert et des informations de configuration de connexion directe au noeud source (207) par l'intermédiaire de la MME (212), si une connexion directe entre le noeud source (207) et le noeud cible (211) est autorisée, le noeud cible (211) permettant ainsi d'inclure des informations de configuration de connexion directe dans le message de réponse de transfert (5) pour permettre au noeud source (207) de déterminer si ledit noeud source (207) doit établir une connexion directe avec le noeud cible (211), et dans lequel
le noeud cible (211) comprend un noeud de petites cellules (16 à 24) ou un noeud de macrocellules (26) et le noeud source (207) comprend l'autre noeud parmi le noeud de petites cellules (16 à 24) et le noeud de macrocellules (26).

15. Produit de programme informatique permettant, lorsqu'il est exécuté sur un ordinateur, d'exécuter le procédé selon l'une quelconque des revendications 1 à 11.
